# DEMANDE DE BREVET EUROPEEN

(11) **EP 0 863 071 A1**
(43) Date de publication de la demande: **09.09.1998**
(21) Numéro de dépôt: 98410012.3
(22) Date de dépôt: 16.02.1998
(51) Int. Cl.: B62M 27/02, B62B 15/00

(54) **Véhicule motorisé sur glace**

(30) Priorité: 24.02.1997 FR 9702377
(71) Demandeur: Sled 3000, 38600 Fontaine (FR)
(72) Inventeur: Termini, Francis, 38170 Seyssinet (FR)
(74) Mandataire: Hecké, Gérard

(57) **Abrégé**

L'invention concerne un véhicule motorisé sur glace entraîné par un moteur, et ayant des patins de glissement 32 agencés à la partie inférieure du châssis 14. Chaque patin 32 est solidarisé au châssis 14 par une liaison mécanique téléscopique à ressort de suspension. Des amortisseurs 40 à bras balanciers 68 et à roues 42 munies de pneumatiques font saillie de la périphérie du châssis 14 et des roues motrices 18,19 et directrice 34, chaque bras étant relié au châssis 14 par un dispositif élastique à torsion 70 pour encaisser les chocs en cas de collision.

## Description

L'invention est relative à un véhicule motorisé sur glace destiné à se déplacer sur une surface de glace, et comportant:
- un poste de conduite supporté par un châssis,
- un système d'entraînement à moto-réducteur accouplé à au moins une roue motrice,
- une source d'énergie embarquée pour l'alimentation du moteur du moto-réducteur,
- un mécanisme de direction relié mécaniquement à une roue directrice,
- des moyens de commande du moto-réducteur, et du mécanisme de direction,
- et des patins de glissement agencés sous la partie inférieure du châssis pour être en contact permanent avec la surface de glace.

La propulsion d'un véhicule motorisé sur glace s'effectue généralement par une action d'agrippage dans la couche superficielle de la glace, produite par un organe d'entraînement mis en mouvement par le moteur, et équipé soit d'un pneu à crampons ou à clous, soit une chenille à patins métalliques articulés. Ce type de véhicules est généralement utilisé dans les grands espaces de glace ou de neige, et met en oeuvre un moteur thermique dont le fonctionnement est relativement bruyant. L'usage d'un tel véhicule sur une patinoire ou sur toute autre surface ou piste réglementée n'est pas concevable, à cause du bruit généré par le moteur, et de l'usure prématurée de la surface de glace.

L'objet de l'invention consiste à réaliser un véhicule motorisé sur glace, ayant un mode de fonctionnement silencieux, et dont le déplacement s'effectue en toute sécurité et confort, sans altérer l'état de surface de la piste de glace.

Le véhicule motorisé selon l'invention est caractérisé en ce que chaque patin de glissement est solidarisé au châssis par une liaison mécanique téléscopique pour assurer la suspension du véhicule, et que des moyens d'amortissement font saillie de la périphérie du châssis pour encaisser les chocs en cas de collision, lesdits moyens d'amortissement comportant au moins un amortisseur latéral ayant un bras balancier monté à pivotement limité sur le châssis par l'intermédiaire d'un dispositif élastique à torsion.

Selon une caractéristique de l'invention, le bras balancier est équipé à l'opposé du dispositif élastique à torsion , d'une roue à pneumatique montée à rotation libre sur un axe, et venant en engagement avec l'obstacle en cas de collision pour absorber une partie de l'énergie.

Le dispositif élastique à torsion comprend une barre solidaire du bras balancier, et agencée entre une pluralité de tampons en matériau déformable, fixés dans un tube en liaison avec le châssis, le matériau de chaque tampon étant compressible sous l'action d'une force de collision en provoquant le pivotement du bras balancier vers une position d'amortissement, la disparition de la force ramenant automatiquement ledit bras balancier vers une position initiale de repos.

Selon un mode de réalisation préférentiel, les moyens d'amortissement comportent quatre amortisseurs à torsion disposés aux quatre coins du châssis en faisant saillie de la roue directrice et des roues motrices, et se trouvant dans un plan horizontal parallèle à la surface de glace, et décalés de cette dernière par un intervalle de faible épaisseur. Les quatre patins de glissement s'étendent longitudinalement entre la roue directrice, et les roues motrices, et symétriquement par rapport au plan médian longitudinal du véhicule

D'autres caractéristiques et avantages ressortiront plus clairement de la description qui va suivre d'un mode de réalisation de l'invention donnée à titre d'exemple non limitatif, et représenté aux dessins annexés dans lesquels:
- la figure 1 est une vue schématique de profil du véhicule motorisé sur glace selon l'invention;
- la figure 2 est une vue de dessous du véhicule de la figure 1;
- la figure 3 est une vue arrière du véhicule de la figure 1;
- la figure 4 montre une vue éclatée en perspective du châssis du véhicule de la figure 1;
- la figure 5 représente une vue en coupe d'un bras balancier d'un amortisseur à torsion;
- la figure 6 est une vue en élévation de la figure 5 montrant le bras balancier dans différentes positions;
- les figures 7A, 7B, 7C montrent différentes phases de fonctionnement de l'amortisseur à torsion en cas de collision du véhicule avec un obstacle;
- la figure 8 montre une vue en coupe d'un patin de glissement à montage téléscopique;
- la figure 9 représente une vue en élévation du groupe moto- réducteur agencé entre les deux roues motrices;
- la figure 10 est une vue en coupe selon la ligne 10-10 de la figure 9;
- la figure 11 représente le schéma du mécanisme de direction associé à la roue directrice du véhicule;
- la figure 12 montre un mode de réalisation du mécanisme de la figure 11.

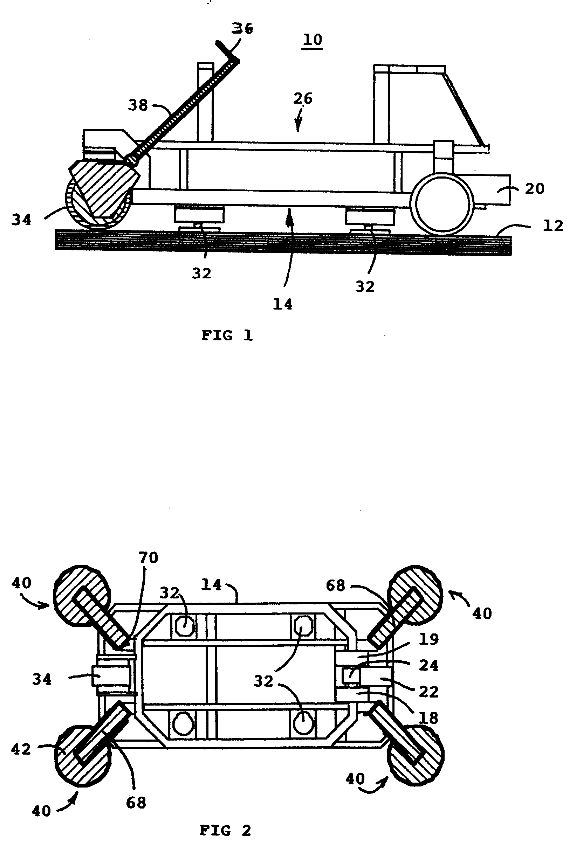

En référence aux figures 1 à 3, un véhicule 10 motorisé est destiné à se déplacer sur une surface de glace 12, par exemple d'une patinoire ou d'un lac gelé. Le véhicule 10 comprend un châssis 14 dont la base 16 sert de support aux différents moyens de propulsion, de glissement, de direction et d'amortissement des chocs.

Les moyens de propulsion comportent une paire de roues motrices 18,19 disposées à l'arrière du châssis 14, et entraînées par un groupe moto-réducteur 20 embarqué, comprenant un moteur électrique 22 accouplé à un réducteur de vitesse 24. Le groupe moto-réducteur 20 se trouve à l'arrière du poste de conduite 26, et sensiblement dans le plan longitudinal du châssis 14. Le moteur 22 est un moteur à courant continu alimenté par une batterie d'accumulateurs (non représentée), et par un circuit électronique 28 de commande et de régulation placé sur une plateforme 30 du châssis.

Les moyens de glissement du véhicule 10 sur la surface de glace 12 sont constitués par quatre patins 32 agencés aux quatre coins de la base 16 du châssis. Chaque patin 32 présente une forme légèrement convexe en contact permanent avec la surface de glace 12, et réalisé en un matériau dur ayant un bon coefficient de glissement.

Les moyens de direction du véhicule 10 sont dotés d'une roue directrice 34 placée dans le plan longitudinal à l'avant du châssis 14, et déplaçable angulairement depuis le poste de conduite 26 par un volant 36 solidarisé à une manivelle 38 rotative. La roue directrice 34 antérieure, les roues motrices 18,19 postérieures et les patins 32 restent en contact permanent avec la surface de glace 12.

Les moyens d'amortissement des chocs encaissés par le véhicule 10 comportent quatre amortisseurs 40 fixés latéralement à la base 16 en faisant saillie du châssis 14 dans la direction transversale. L'extrémité de chaque amortisseur 40 est pourvue d'une roue 42 sur laquelle est monté un pneumatique. Toutes les roues 42 des quatre amortisseurs 40 sont situées dans un plan horizontal parallèle à la surface de glace 12, et décalé de cette demière par un intervalle 44 de faible épaisseur.

Le circuit électronique 28 est logé dans un compartiment spécial au-dessus de la plateforme 30, et comprend essentiellement de l'appareillage 46 électrique d'alimentation et de contrôle, un dispositif de régulation 48 du moteur 22, un dispositif de transmission 50 à émetteur-récepteur à ondes radioélectriques, et un chargeur 52 de batterie. La mise en service du véhicule 10 peut intervenir depuis le tableau de bord du poste de conduite, par exemple au moyen d'un jeton ou d'une carte de crédit. L'utilisateur peut ensuite agir sur un organe de commutation pour le choix du sens de rotation du moteur 22 (marche avant ou arrière), ainsi que sur un organe de réglage pour ajuster la vitesse. Le dispositif de transmission 50 peut recevoir à tout moment un ordre de commande à distance provoquant soit l'interruption de l'alimentation en cas d'un ordre d'inhibition entraînant l'arrêt du moteur 22, soit la mise en service de l'alimentation du moteur 22 en cas d'un ordre de validation. Le chargeur 52 de batterie est susceptible d'être connecté à une prise extérieure pour recharger les accumulateurs, et un contrôleur de charge (non représenté) est prévu sur le tableau de bord pour contrôler l'autonomie du véhicule 10.

Sur la figure 4, le châssis 14 est constitué par une structure métallique de tubes en acier, assemblés par soudage. La base 16 du châssis 14 comporte deux longerons 53,55 dotés à l'avant d'un étrier 54 de support de la roue directrice 34, et de deux protubérances 56 pour la fixation des supports 58 des amortisseurs 40 antérieurs. A l'arrière, les longerons 53,55 sont réunis par une entretoise 60 servant d'appui à l'ensemble roues motrices 18,19 et groupe moto-réducteur 20, et aux supports 58 des amortisseurs 40 postérieurs. La base 16 assure la rigidité mécanique du châssis 14, lequel est renforcé d'autre part par une ceinture 62 latérale à laquelle sont soudés deux arceaux 64,66 pour constituer le poste de conduite 26.

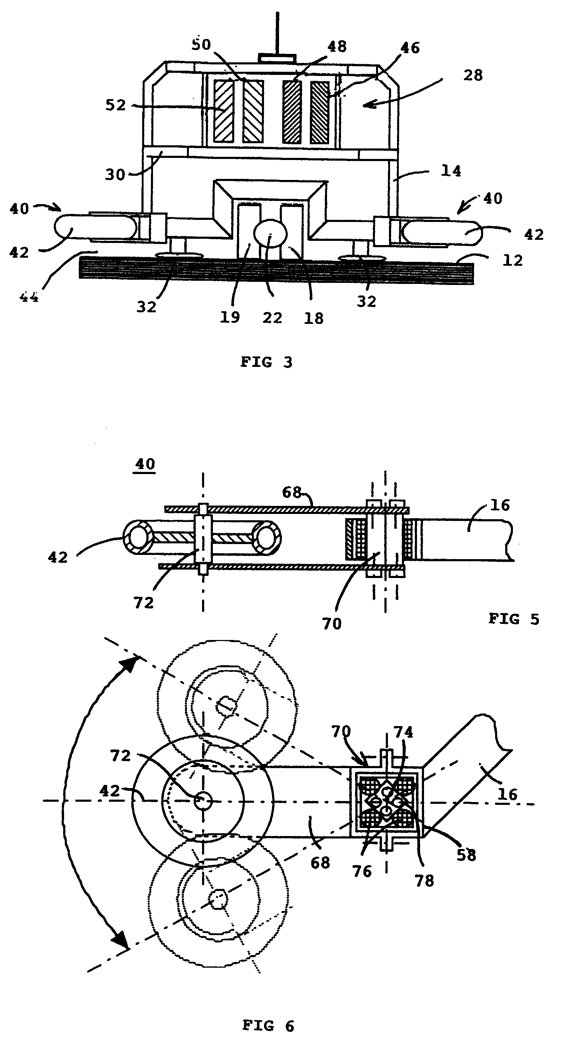

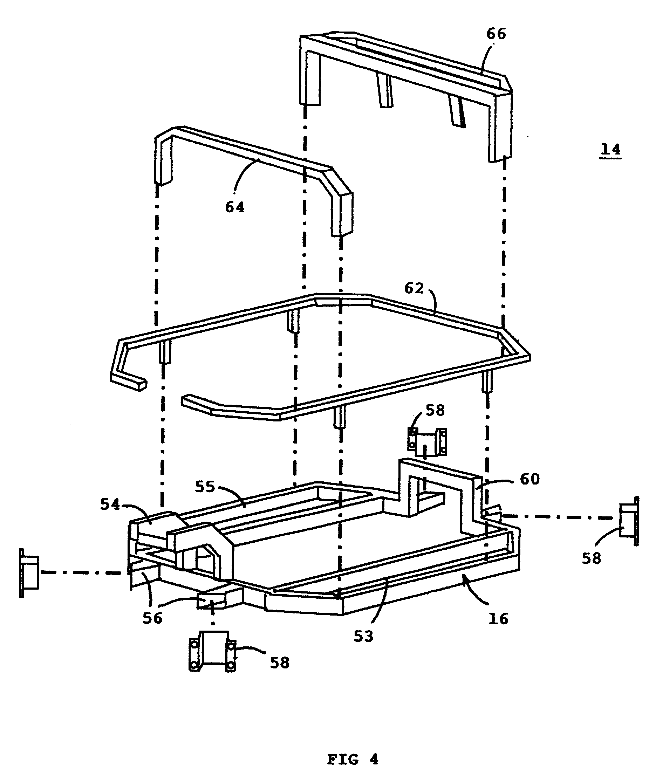

En référence aux figures 5 et 6, chaque amortisseur 40 latéral comporte un bras balancier 68 monté à pivotement limité sur le support 58 de la base 16 du châssis 14 par l'intermédiaire d'un dispositif élastique à torsion 70. A l'extrémité opposée du bras balancier 68 se trouve la roue 42 à pneumatique montée à rotation libre sur un axe 72. Le dispositif élastique à torsion 70 comprend une barre 74 de section carrée solidaire du bras balancier 68. Les côtés consécutifs de ladite barre 74 coopèrent avec des tampons 76 en matériau déformable et compressible, notamment en caoutchouc, disposés aux quatre coins d'un tube 78 en acier formant le support 58 de la base 16 du châssis 14.

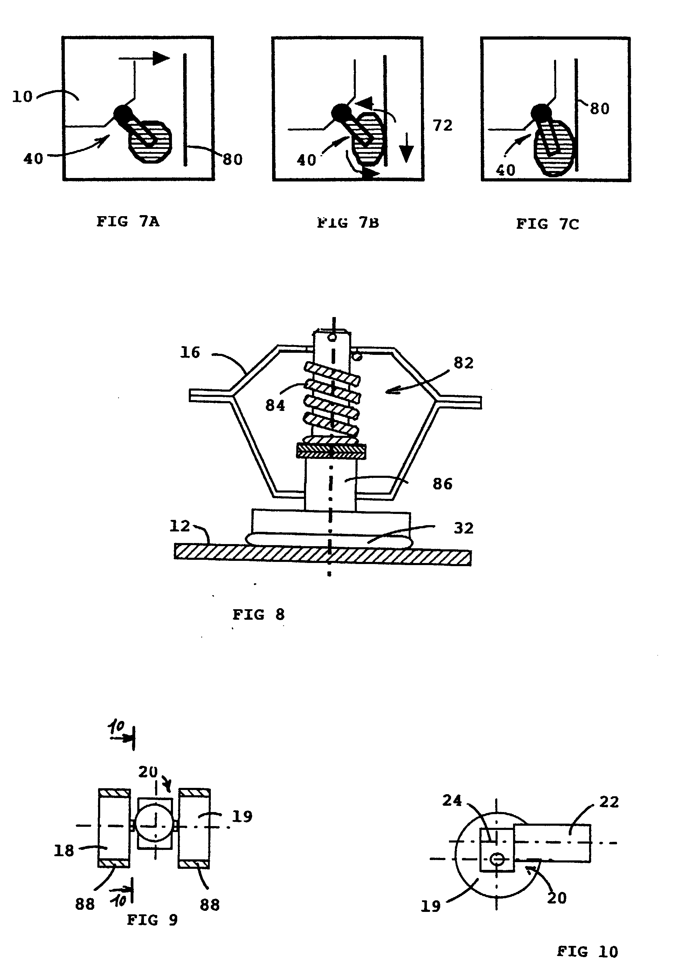

Le fonctionnement d'un amortisseur 40 latéral est illustré sur les figures 7A,7B,7C:
En cas de collision du véhicule 10 contre un obstacle 80, par exemple un autre véhicule, ou la rembarde d'une patinoire, l'amortisseur 40 concerné subit d'abord un effet d'écrasement de la roue 42 (fig. 7B) après la déformation élastique du pneumatique, suivi d'un mouvement de rotation libre de la roue 42 autour de l'axe 72 du bras balancier 68. Par la suite (fig. 7C) se produit une déformation du dispositif élastique à torsion 70, entraînant un pivotement du bras balancier 68, lequel foumit un couple de décélération progressive du véhicule 10 par absorption d'énergie.

Sur la figure 8, chaque patin 32 de glissement est monté sur la base 16 du châssis 14 au moyen d'une liaison mécanique téléscopique 82 faisant usage d'un ressort de compression 84 intercalé entre l'embrase 86 du patin 32, et la base 16. Le montage téléscopique des quatre patins 32 assure la suspension du véhicule 10, et garantit une répartition uniforme de la pression de contact des roues 34,18,19 et des patins 32 sur la surface de glace 12. Sur les figures 9 et 10, le groupe moto-réducteur 20 est disposé entre les deux roues motrices 18,19 dans le plan longitudinal du châssis 14. Le moteur 22 est en porte-à-faux sur le réducteur de vitesse 24, lequel entraîne directement les deux roues motrices 18,19. La périphérie de chaque roue motrice 18,19 est recouverte par un revêtement 88 spécial réalisé en un matériau polymère, ayant une bonne résistance mécanique, et un coefficient de frottement élevé sur la glace, autorisant à la fois la propulsion et le glissement du véhicule 10 sur la surface de glace 12.

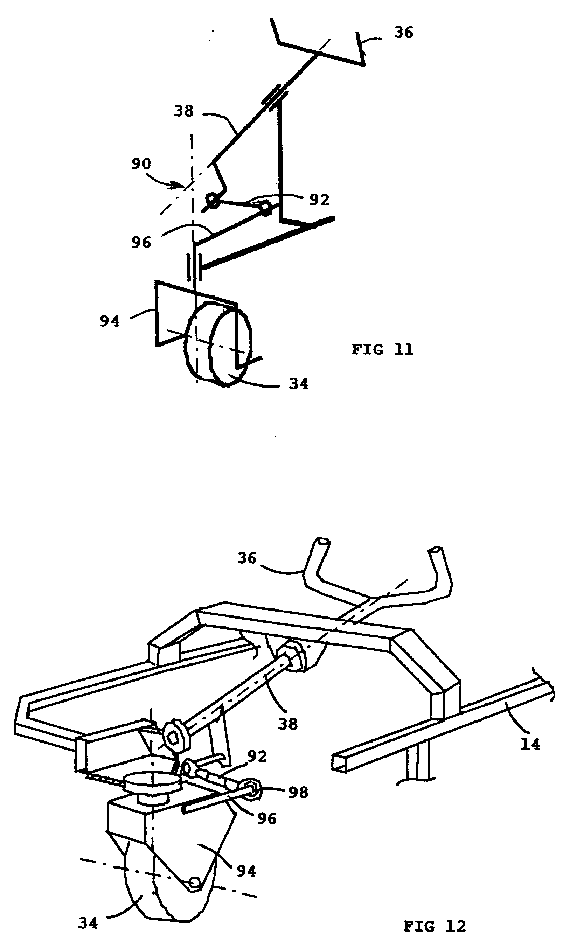

En référence aux figures 11 et 12, la roue directrice 34 à débattement angulaire placée à l'avant du véhicule 10, est reliée au volant 36 par un mécanisme de direction 90 comprenant la manivelle 38 articulée à une biellette 92.de transmission. Le support 94 de la roue directrice 34 est guidée en rotation au moyen d'un organe de guidage 96 accouplé à une rotule 98 de la biellette 92. La roue directrice 34 est revêtue par le même revêtement périphérique que celui des roues motrices 18,19.

Les quatre patins 32 de glissement sont agencés aux quatre coins du châssis 14 parallélépipédique, en s'étendant longitudinalement entre la roue directrice 34, et les roues motrices 18,19, et symétriquement par rapport au plan longitudinal du véhicule 10.

## Revendications

1. Véhicule motorisé sur glace destiné à se déplacer sur une surface de glace (12), et comportant:
- un poste de conduite (26) supporté par un châssis (14),
- un système d'entraînement à moto-réducteur (20) accouplé à au moins une roue motrice (18,19),
- une source d'énergie embarquée pour l'alimentation du moteur (22) du moto-réducteur (20),
- un mécanisme de direction (90) relié mécaniquement à une roue directrice (34),
- des moyens de commande du moto-réducteur (20), et du mécanisme de direction (90),
- et des patins (32) de glissement agencés sous la partie inférieure du châssis (14) pour être en contact permanent avec la surface de glace (12),
caractérisé en ce que chaque patin (32) de glissement est solidarisé au châssis (14) par une liaison mécanique téléscopique (82) pour assurer la suspension du véhicule (10), et que des moyens d'amortissement font saillie de la périphérie du châssis (14) pour encaisser les chocs en cas de collision, lesdits moyens d'amortissement comportant au moins un amortisseur (40) latéral ayant un bras balancier (68) monté à pivotement limité sur le châssis (14) par l'intermédiaire d'un dispositif élastique à torsion (70).

2. Véhicule motorisé sur glace selon la revendication 1, caractérisé en ce que le bras balancier (68 ) est équipé à l'opposé du dispositif élastique à torsion (70), d'une roue (42) à pneumatique montée à rotation libre sur un axe (72), et venant en engagement avec l'obstacle en cas de collision pour absorber une partie de l'énergie.

3. Véhicule motorisé sur glace selon la revendication 1, caractérisé en ce que le dispositif élastique à torsion (70) comprend une barre (74) solidaire du bras balancier (68), et agencée entre une pluralité de tampons (76) en matériau déformable, fixés dans un tube (78) en liaison avec le châssis (14), le matériau de chaque tampon (76) étant compressible sous l'action d'une force de collision en provoquant le pivotement du bras balancier (68) vers une position d'amortissement, la disparition de ladite force ramenant automatiquement ledit bras balancier (68) vers une position initiale de repos.

4. Véhicule motorisé sur glace selon la revendication 1, caractérisé en ce que les moyens d'amortissement comportent quatre amortisseurs (40) à torsion disposés aux quatre coins du châssis (14) en faisant saillie de la roue directrice (34) et des roues motrices (18,19), et se trouvant dans un plan horizontal parallèle à la surface de glace (12), et décalés de cette dernière par un intervalle (44) de faible épaisseur.

5. Véhicule motorisé sur glace selon la revendication 4, caractérisé en ce que les quatre patins (32) de glissement s'étendent longitudinalement entre la roue directrice (34), et les roues motrices (18,19), et symétriquement par rapport au plan médian longitudinal du véhicule (10).

6. Véhicule motorisé sur glace selon la revendication 1, caractérisé en ce que la périphérie de la roue directrice (34) et de chaque roue motrice (18,19) est recouverte par un revêtement (88) en matériau polymère adapté à la propulsion et au glissement sur la glace.

7. Véhicule motorisé sur glace selon la revendication 1, caractérisé en ce que le groupe moto-réducteur (20) se trouve à l'arrière du poste de conduite (26), au niveau des roues motrices (18,19), et desdits moyens d'amortissement.

8. Véhicule motorisé sur glace selon la revendication 7,caractérisé en ce que les moyens de commande du moteur (22) du groupe moto-réducteur (20) comportent un circuit électronique (28) logé dans un compartiment distinct au-dessus du moteur (22), en prenant appui sur une plateforme (30) du châssis (14) à l'arrière du poste de conduite (26), le circuit électronique (28) coopérant avec un dispositif de transmission (50) à ondes radioéléctrique pour la commande à distance de l'alimentation du moteur (22).
